# EUROPÄISCHE PATENTSCHRIFT

(11) **EP 0 843 694 B1**
(45) Veröffentlichungstag und Bekanntmachung des Hinweises auf die Patenterteilung: **10.05.2000**
(21) Anmeldenummer: 96927070.1
(22) Anmeldetag: 02.08.1996
(51) Int. Cl.: C08G 18/62, C08G 18/40, C09D 175/04

(54) **ÜBERZUGSMITTEL, DEREN VERWENDUNG UND VERFAHREN ZUR HERSTELLUNG VON MEHRSCHICHTÜBERZÜGEN**
COATING AGENT, ITS USE AND PROCESS FOR PRODUCING MULTILAYERED COATINGS
REVETEMENT, SON UTILISATION ET PROCEDE DE LA FABRICATION DE REVETEMENT A COUCHES MULTIPLES

(30) Priorität: 08.08.1995 DE 19529124
(43) Veröffentlichungstag der Anmeldung: 27.05.1998
(73) Patentinhaber: DuPont Performance Coatings GmbH & Co. KG, 42285 Wuppertal (DE)
(72) Erfinder: FLOSBACH, Carmen, D-42115 Wuppertal (DE); HERRMANN, Friedrich, D-42117 Wuppertal (DE); KERBER, Hermann, D-42369 Wuppertal (DE); REIFFERSCHEIDT, Heinz-Walter, D-44803 Bochum (DE); SCHLOESSER, Carmen, D-42781 Haan (DE); SCHUBERT, Walter, D-42349 Wuppertal (DE)
(74) Vertreter: Gille Hrabal Struck Neidlein Prop Roos
(86) Internationale Anmeldenummer: EP9603402
(87) Internationale Veröffentlichungsnummer: WO9706197

(56) Entgegenhaltungen:
- EP-A- 0 625 529
- EP-A- 0 653 468
- WO-A-93/07195
- US-A- 5 098 956

## Beschreibung

Die Erfindung betrifft Überzugsmittel, die insbesondere für Einbrenn-Mehrschichtüberzüge, beispielsweise für die Autoserienlackierung, geeignet sind, die sich insbesondere durch hohe Säurebeständigkeit, eine hohe Beständigkeit gegenüber Schwitzwasser und ausgezeichneten Decklackstand auszeichnen.

Die EP-A-0 653 468 beschreibt Überzugsmittel, die eine Kombination zweier unterschiedlicher hydroxylfunktioneller (Meth)acryl-Copolymerisate sowie eine Vernetzerkombination aus geblocktem Polyisocyanat und Aminoplastharz enthält. Gegebenenfalls kann Polyesterharz als weiteres Bindemittel zu den (Meth)acryl-Copolymerisaten zugemischt werden.

Aufgabe der Erfindung ist es, Überzugsmittel für Einbrenn-Mehrschichtüberzüge bereitzustellen, die für die Automobilserienlackierung geeignet sind und die sich durch eine hohe Säurebeständigkeit, ausgezeichneten Decklackstand und durch eine gute Beständigkeit gegen Schwitzwasserbelastung auszeichnen.

Die US-A-5 098 956 beschreibt wäßrige Überzugsmittel mit hohem Festkörpergehalt und verlängerter Topfzeit, die an der Luft rasch trocknen. Sie enthalten als Bindemittel ein Gemisch aus einem Acrylcopolymer mit niedriger Glasübergangstemperatur und hohem Hydroxylgehalt, und einem Acrylcopolymer mit hoher Glasübergangstemperatur und niedrigem Hydroxylgehalt. Bei der Herstellung beider Polyolkomponenten können bis zu etwa 30 Gew.-% Styrol-Comonomere mitverwendet werden.

Es hat sich gezeigt, daß diese Aufgabe gelöst werden kann durch ein Überzugsmittel, das einen Gegenstand der vorliegenden Erfindung bildet und als Bindemittel enthält:

| | |
|---|---|
| A) 20 bis 40 Gew.-% | eines oder mehrerer hydroxyfunktioneller (Meth)acryl-Copolymerisate, erhältlich aus |
| a1)30 bis 50 Gew.-% | Styrol und/oder einem oder mehreren Styrolderivaten |
| a2)15 bis 30 Gew.-% | Hydroxyethyl-, Hydroxypropyl- und/oder Hydroxybutyl(meth)acrylat |
| a3)15 bis 40 Gew.-% | eines oder mehrerer nicht-funktionalisierter |
| | (Cyclo)alkyl(meth)acrylate mit 8 bis unter 18 C-Atomen im (Cyclo)alkylrest |
| a4)2 bis 4 Gew.-% | (Meth)acrylsäure |
| a5)0 bis 30 Gew.-% | eines oder mehrerer nicht-funktionalisierter (Cyclo)alkyl(meth)acrylate mit bis zu 7 C-Atomen im (Cyclo)alkylrest |
| B) 20 bis 40 Gew.-% | eines oder mehrerer hydroxyfunktioneller (Meth)acryl-Copolymerisate, erhältlich aus |
| b1)25 bis 50 Gew.-% | Hydroxyethyl-, Hydroxypropyl- und/oder Hydroxybutyl(meth)acrylat |
| b2)20 bis 40 Gew.-% | eines oder mehrerer nicht-funktionalisierter (Cyclo)alkyl(meth)acrylate mit 8 bis unter 18 C-Atomen im (Cyclo)alkylrest |
| b3)20 bis 40 Gew.-% | eines oder mehrerer nicht-funktionalisierter (Cyclo)alkyl(meth)acrylate mit bis zu 7 C-Atomen im (Cyclo)alkylrest |
| b4)0,3 bis 2 Gew.-% | (Meth)acrylsäure |
| C)0 bis 40 Gew.% | eines oder mehrerer von A) und B) unterschiedlicher hydroxyfunktioneller Bindemittel, |
| D) 10 bis 50 Gew.-% | eines oder mehrerer freier oder blockierter Polyisocyanate, |
| E) 0 bis 40 Gew.-% | einer oder mehrerer mit den Hydroxylgruppen der Komponenten A), B) und gegebenenfalls C) unter Ether- und/oder Estergruppenbildung vernetzenden Komponenten auf Triazinbasis, |

wobei die Summen der Komponenten A) bis E), a1) bis a5) und b1) bis b4) sich jeweils zu 100 Gew.-% ergänzen.

Die Herstellung der in den erfindungsgemäßen Überzugsmitteln enthaltenen (Meth)acrylcopolymerisate kann durch radikalische Copolymerisation nach üblichen Verfahren erfolgen. Für die Synthese der im erfindungsgemäßen Überzugsmittel eingesetzten (Meth)acrylcopolymerisate (Komponente A und B) wird das Lösungspolymerisationsverfahren bevorzugt. Bei diesem Verfahren wird das Lösemittel in das Reaktionsgefäß vorgelegt, auf Siedetemperatur geheizt und das Monomeren/Initiatorgemisch kontinuierlich in einer bestimmten Zeit zudosiert.

Der in der vorliegenden Beschreibung und den Patentansprüchen gebrauchte Ausdruck "(Meth)acryl" steht synonym für "Acryl und/oder Methacryl". Der Ausdruck "(Cyclo)alkyl" steht für "Cycloalkyl und/oder Alkyl".

Die Polymerisation wird beispielsweise bei erhöhter Temperatur, z.B. bei Temperaturen zwischen 80°C und 180°C, vorzugsweise bei 100°C bis 150°C durchgeführt.

Die Polymerisationsreaktion kann mit üblichen Radikalinitiatoren gestartet werden. Beispiele für Radikalinitiatoren sind solche auf Peroxidbasis, z.B. Dialkylperoxide, wie Di-tert.-Butylperoxid, Di-Cumylperoxid; Diacylperoxide wie Dibenzoylperoxid, Dilauroylperoxid; Hydroperoxide, wie Cumolhydroperoxid, tert.-Butylhydroperoxid; Perester, wie tert.-Butylperbenzoat, tert.-Butylperpivalat, tert.-Butylper-3,5,5-trimethylhexanoat, tert.-Butylper-2-ethylhexanoat; Peroxiddicarbonate, wie Di-2-ethylhexylperoxydicarbonat, Dicyclohexylperoxydicarbonat; Perketale, wie 1,1-Bis(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid und Azoverbindungen, wie 2,2'-Azo-bis(2,4-dimethyl-valeronitril), 2,2'-Azobis(2-Methylbutyronitril), 1,11-Azobiscyclohexancarbonitril, Azobisisobutyronitril; sowie C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt. Bei der Polymerisation können die Monomeren auch getrennt bzw. zeitlich versetzt zudosiert werden. Die Monomeren oder das eingesetzte Monomerengemisch können die Radikalinitiatoren enthalten oder die Radikalinitiatoren können zur Monomerenmischung gegebenenfalls geringfügig zeitversetzt zugesetzt oder separat zudosiert werden.

Als organische Lösemittel, die zweckmäßigerweise bei der Lösungspolymerisation eingesetzt werden können, eignen sich lackübliche Lösemittel, wie sie später auch in dem erfindungsgemäßen Überzugsmittel eingesetzt werden können, beispielsweise: Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol, aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C). Aliphatische Kohlenwasserstoffe können ebenfalls im Verschnitt mit den oben genannten Lösemitteln eingesetzt werden.

Zur Regelung des Molekulargewichts können Kettenüberträger mitverwendet werden. Beispiele sind übliche Kettenüberträger, wie Mercaptane, Thioglykolsäureester, Chlorkohlenwasserstoffe, Cumol, dimeres alpha-Methylstyrol.

Die Polymerisationsbedingungen (Reaktionstemperatur, Zulaufzeit der Monomerenmischung, Lösungskonzentration werden bevorzugt so eingerichtet, daß das (Meth)acryl-Copolymere A) ein Gewichtsmittel der Molmasse (Mw) zwischen 5000 und 20000 und das (Meth)acryl-Copolymere B) ein Gewichtsmittel der Molmasse (Mw) zwischen 2000 und 5000, jeweils bestimmt durch Gelpermeationschromatographie unter Verwendung von Polystyrol als Eichsubstanz, aufweisen.

Die hydroxylgruppenhaltigen (Meth)acryl-Copolymeren A) liegen bevorzugt in einem Glasübergangstemperaturbereich zwischen +30 und +60°C, während die hydroxylgruppenhaltigen (Meth)acryl-Copolymeren B) bevorzugt einen Glasübergangstemperaturbereich zwischen -20 und +40°C aufweisen, jeweils berechnet aus der Glasübergangstemperatur der Homopolymerisate der einzelnen der in der Literatur angegebenen Monomeren (z.B. nach der FOX-Gleichung, s. z.B. Polymere Werkstoffe, Batzer, 1985, Seite 307).

Das (Meth)acryl-Copolymere A) weist bevorzugt eine OH-Zahl von 80 bis 120 mg KOH/g und eine Säurezahl bevorzugt von 15 bis 30 mg KOH/g, das (Meth)acryl-Copolymere B), das frei von Styrol und Styrolderivaten ist, weist bevorzugt eine OH-Zahl von 120 bis 180 mg KOH/g und bevorzugt eine Säurezahl von 3 bis 15 mg KOH/g auf.

Als Monomere für die Herstellung der hydroxyfunktionellen (Meth)acrylcopolymeren A) werden als Komponente al) beispielsweise Styrol und/oder Styrolderivate, z.B. Vinyltoluol, p-Methylstyrol und p-tert.-Butylstyrol eingesetzt.

Bevorzugte Monomere a2) für die Herstellung der hydroxyfunktionellen (Meth)acrylcopolymeren A) sind Hydroxyethyl-, Hydroxypropyl- oder Hydroxybutylmethacrylat. Besonders bevorzugt sind die Monomeren mit primären Hydroxygruppen, wie 3-Hydroxypropyl- oder 4-Hydroxybutyl-methacrylat.

Beispiele für Monomere a3) für die Herstellung der hydroxyfunktionellen (Meth)acrylcopolymeren A) sind Ethylhexyl(meth)acrylat, Trimethylcyclohexyl(meth)acrylat, Lauryl(meth)acrylat, Stearyl(meth)acrylat, Isobornyl(meth)acrylat, Octyl(meth)acrylat, 3,5,5-Trimethylhexyl(meth)acrylat, Nonyl(meth)acrylat, Decyl(meth)acrylat, Dodecyl(meth)acrylat, Hexadecyl(meth)acrylat, Octadecyl(meth)acrylat, 4-tert-Butylcyclohexyl(meth)acrylat. Die Methacrylverbindungen sind dabei bevorzugt.

Bevorzugtes Monomeres a4) ist Acrylsäure.

Beispiele für Monomere a5) für die Herstellung der hydroxyfunktionellen (Meth)acryl-Copolymeren A) sind Methyl(meth)acrylat, Ethyl(meth)acrylat, Isopropyl(meth)acrylat, n-Butyl(meth)acrylat, Isobutyl(meth)acrylat, tert-Butyl(meth)acrylat, Cyclohexyl(meth)acrylat. Die Methacrylverbindungen sind dabei bevorzugt.

Bevorzugte Monomere bl) für die Herstellung der hydroxyfunktionellen (Meth)acryl-Copolymeren B) sind Hydroxyethyl-, Hydroxypropyl- oder Hydroxybutylmethacrylat. Besonders bevorzugt sind die Monomeren mit sekundären Hydroxygruppen, wie 2-Hydroxypropyl- oder 2- oder 3- Hydroxybutyl-methacrylat.

Beispiele für Monomere b2) für die Herstellung der hydroxyfunktionellen (Meth)acryl-Copolymeren B) sind Ethylhexyl(meth)acrylat, Trimethylcyclohexyl(meth)acrylat, Lauryl(meth)acrylat, Stearyl(meth)acrylat, Isobornyl(meth)acrylat, Octyl(meth)acrylat, 3,5,5-Trimethylhexyl(meth)acrylat, Nonyl(meth)acrylat, Decyl(meth)acrylat, Dodecyl(meth)acrylat, Hexadecyl(meth)acrylat, Octadecyl(meth)acrylat, 4-Tertiärbutylcyclohexyl(meth)acrylat. Die Methacrylverbindungen sind dabei bevorzugt.

Beispiele für Monomere b3) für die Herstellung der hydroxyfunktionellen (Meth)acryl-Copolymeren B) sind Methyl(meth)acrylat, Ethyl(meth)acrylat, Isopropyl(meth)acrylat, n-Butyl(meth)acrylat, Isobutyl(meth)acrylat, tert.-Butyl(meth)acrylat, Cyclohexyl(meth)acrylat. Die Methacrylverbindungen sind dabei bevorzugt.

Bevorzugtes Monomeres b4) ist Acrylsäure.

Der Anteil an Methacrylmonomeren innerhalb der (Meth)acryl-Copolymerisate A) und B) beträgt bevorzugt jeweils über 50 Gew.-%, bezogen auf die Summe der Monomeren a2) bis a5) bzw. b1) bis b4).

Die hydroxyfunktionellen (Meth)acryl-Copolymeren A) und B) können mit einem Lacton "kettenverlängert" werden. Die Lactone (cyclische Ester) lagern sich an Hydroxyl- und/oder Carboxylgruppen an, wobei der Lacton-Ring geöffnet wird und eine neue endständige Hydroxyl- oder Carboxylgruppe entsteht. Ein Beispiel für ein besonders bevorzugtes Lacton ist das epsilon-Caprolacton. Die Umsetzung mit dem Lacton kann beispielsweise unmittelbar im AnschluB an die Harzsynthese, d.h. an die Synthese des (Meth)acryl-Copolymerisats A) und/oder B) erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Die erfindungsgemäßen Überzugsmittel können als Komponente C) ein oder mehrere von A) und B) verschiedene hydroxyfunktionelle Bindemittel enthalten, beispielsweise von A) und B) verschiedene (Meth)acrylcopolymerharze, Polyesterharze oder auch Polyurethanharze. Bevorzugt enthalten die erfindungsgemäßen Überzugsmittel neben A) und B) keine weiteren Bindemittel.

Die erfindungsgemäßen Überzugsmittel enthalten als Komponente D) ein oder mehrere freie oder blockierte Polyisocyanate. Sind blockierte Polyisocyanate enthalten, so handelt es sich bei den erfindungsgemäßen Überzugsmitteln um einkomponentige (1K)-Überzugsmittel. Sind freie Polyisocyanate vorhanden, so werden sie als zweikomponentige (2K)-Systeme formuliert.

Beispiele für Polyisocyanate, die in freier oder blockierter Form als Komponente D) im erfindungsgemäßen Überzugsmittel eingesetzt werden können, sind cycloaliphatische, aliphatische und/oder aromatische Polyisocyanate wie 1,2-Propylendiisocyanat, 2,3-Butylendiisocyanat, Tetramethylendiisocyanat, 1,6-Hexamethylendiisocyanat, 2,2,4-Trimethylendiisocyanat, 1,12-Dodecandiisocyanat, Cyclohexan-1,3-und 1,4-diisocyanat, 1-Isocyanato-3,3,5-trimethyl-5-isocyanatomethylcyclohexan (=Isophorondiisocyanat IPDI), Perhydro-2,4'- und/oder -4,4'-diphenylmethandiisocyanat, 1,3- und 1,4-Phenylendiisocyanat, 2,4-und 2,6-Toluylendiisocyanat, Diphenylmethan-2,4'- und/oder -4,4'-diisocyanat, 3,2'- und/oder 3,4-Diisocyanato-4-methyldiphenylmethan, Naphthylen-1,5-diisocyanat, m-Xylylendiisocyanat, p-Xylylendiisocyanat, Triphenylmethan-4,4'-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Uretdiongruppen, Urethangruppen, acylierte Harnstoffgruppen und Biuretgruppen aufweisende Polyisocyanate.

Besonders gut für die Erfindung geeignet sind übliche Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-isocyanatohexyl)-biuret, das sich von Isophorondiisocyanat oder Hexandiisocyanat ableitende Isocyanurat oder niedermolekulare Urethangruppen aufweisende Polyisocyanate, wie sie durch Umsetzung von im Überschuß eingesetztem Diisocyanat mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet. In diesen bekannten Prepolymeren entspricht das Verhältnis von Isocyanatgruppen zu gegenüber Isocyanat reaktiven Wasserstoffatomen beispielsweise 1,05 bis 10 : 1, vorzugsweise 1,1 bis 3 : 1, wobei die Wasserstoffatome vorzugsweise aus Hydroxylgruppen stammen. Die Art und Mengenverhältnisse der bei der Herstellung der NCO-Prepolymeren eingesetzten Ausgangsmaterialien werden im übrigen vorzugsweise so gewählt, daß die NCO-Prepolymeren eine mittlere NCO-Funktionalität von 2 bis 4, vorzugsweise von 2 bis 3 und ein Zahlenmittel der Molmasse von 500 bis 10000, vorzugsweise von 800 bis 4000 aufweisen.

Ebenfalls möglich ist die Verwendung von Copolymeren von isocyanatfunktionellen ungesättigten Monomeren, wie beispielsweise des vinylisch ungesättigten Monoisocyanates Dimethyl-m-isopropenylbenzylisocyanat als Polyisocyanat, wie sie unter anderem in der DE-A-41 37 615 beschrieben sind.

Handelt es sich bei der Komponente D) um blockierte Polyisocyanate, so können übliche Blockierungsmittel verwendet werden, wie übliche CH-acide, NH-, SH- oder OH-funktionelle Verbindungen, die unter Härtungsbedingungen die Vernetzung ermöglichen. Beispiele sind CH-acide Verbindungen wie Acetylaceton oder CH-acide Ester, wie z.B. Acetessigsäurealkylester, Malonsäuredialkylester, aliphatische oder cycloaliphatische Alkohole, wie n-Butanol, Isopropanol, tert.-Butanol, Furfurol, 2-Ethylhexanol, Cyclohexanol; Phenole, wie Kresol, tert.-Butylphenol, Dialkylaminoalkohole wie Dimethylaminoethanol, Oxime wie Methylethylketoxim, Acetonoxim, Cyclohexanonoxim, Acetophenonoxim, Lactame wie epsilon-Caprolactam oder Pyrrolidon-2, Imide wie Phthalimid oder N-Hydroxy-maleinimid, Hydroxyalkylester, Hydroxamsäuren und deren Ester, N-Alkylamide wie Methylacetamid, Imidazole wie 2-Methylimidazol, Pyrazole wie 2,3-Dimethylpyrazol. Es können aber auch Gemische dieser Blockierungsmittel eingesetzt werden.

Im Rahmen der vorliegenden Erfindung sind CH-acide Ester und/oder Oxime als Blockierungsmittel für die Polyisocyanate bevorzugt, besonders bevorzugt sind die CH-aciden Ester. Die Alkylgruppen der Ester, die im Malonsäuredialkylester bzw. Acetessigsäureester gleich oder verschieden sein können, weisen bevorzugt 1 bis 5 Kohlenstoffatome auf. Beispiele für Malonsäuredialkylester sind C₁-C₅-Alkylester, wie z.B. Malonsäuredimethyl-, -diethyl-, -diisopropyl, -dibutyl-, -di-tert.-butyl- und -dipentylester. Besonders bevorzugt ist Malonsäurediethylester. Beispiele für Acetessigsäurealkylester sind C₁-C₅-Alkylester wie Acetessigsäure -methyl-, -ethyl-, -isopropyl-, -butyl-, -tert.-butyl und -pentylester. Besonders bevorzugt ist Acetessigsäurethylester. Beispiele für bevorzugte Oxime sind Acetonoxim und Butanonoxim. Möglich ist es auch Gemische dieser Blockierungsmittel einzusetzen.

Das Molverhältnis der aciden Wasserstoff enthaltenden Blockierungsmittel zu den NCO-Gruppen der Isocyanate, beispielsweise das Verhältnis der Malonsäuredialkylester und/oder Acetessigsäurealkylester zu NCO-Gruppen kann variiert werden, beispielsweise von 0,5 : 1 bis 1,5 : 1. Bei einem NCO-Überschuß können die freien NCO-Gruppen gegebenenfalls mit anderen Reaktionspartnern umgesetzt werden.

Die Blockierungsreaktion mit CH-aciden Verbindungen kann bevorzugt katalysiert werden. Bei den eingesetzten Katalysatoren für die Blockierung der Polyisocyanate handelt es sich bevorzugt um Alkalihydroxide, beispielweise Alkalimetallhydroxide, wie Lithium-, Natrium- und/oder Kaliumhydroxid. Bevorzugt werden die wasserfreien Alkalimetallhydroxide eingesetzt. Besonders bevorzugt wird Lithiumhydroxid verwendet. Die Katalysatoren werden in geringen Mengen eingesetzt, beispielsweise in Mengen von 0,1 bis 2 Gew.-%, bevorzugt 0,3 bis 1 Gew.-%, bezogen auf das Gewicht von Isocyanat und CH-acidem Blockierungsmittel. Die Katalysatoren werden in fester Form, beispielsweise pulverisiert, eingesetzt und nach Beendigung der Blockierungsreaktion aus dem Reaktionsgemisch mechanisch entfernt, beispielsweise durch Filtration.

Zur Blockierung können auch mehr als eine Art von Schutzgruppe, bevorzugt solche mit unterschiedlicher Reaktivität, verwendet werden. Es ist so beispielsweise möglich, ein Gemisch von zwei oder mehreren unterschiedlich blockierten Polyisocyanaten D) zu verwenden oder ein Polyisocyanat einzusetzen, das intramolekular mit zwei oder mehreren unterschiedlichen Schutzgruppen blockiert ist.

Handelt es sich bei der Komponente D) um blockierte Polyisocyanate, so enthalten die erfindungsgemäßen Überzugsmittel bevorzugt ein oder mehrere mit den Hydroxylgruppen der Komponenten A), B) und gegebenenfalls C) unter Ether- und/oder Estergruppenbildung vernetzende Komponenten E) auf Triazinbasis.

Bei den unter Ethergruppenbildung mit den Hydroxylgruppen der Komponenten A), B) und gegebenenfalls C) vernetzenden Komponenten E) auf Triazinbasis handelt es sich beispielsweise bevorzugt um als Vernetzer übliche Melaminharze, wie z.B. Methyl-veretherte Melaminharze, wie die Handelsprodukte Cymel 325, Cymel 327, Cymel 350 und Cymel 370, Maprenal MF 927. Weitere Beispiele für verwendbare Melaminharze sind butanol- oder isobutanolveretherte Melaminharze wie z.B. die Handelsprodukte Setamin US 138 oder Maprenal MF 610; mischveretherte Melaminharze, die sowohl butanol- als auch methanolverethert sind, wie z.B. Cymel 254, sowie Hexamethoxymethylmelamin (HMMM) wie z.B. Cymel 301 oder Cymel 303, wobei letztere zur Vernetzung einen externen Säurekatalysator wie z.B. p-Toluolsulfonsäure benötigen können. Derartige Säurekatalysatoren können gegebenenfalls mit Aminen oder Epoxiden ionisch oder nichtionisch blockiert sein.

Bei den unter Estergruppenbildung mit den Hydroxylgruppen der Komponenten A), B) und gegebenenfalls C) vernetzenden Komponenten E) auf Triazinbasis handelt es sich um Umesterungsvernetzer, wie beispielsweise bevorzugt Tris(alkoxycarbonylamino)triazin, dessen Eignung als Vernetzer für hydroxyfunktionelle Bindemittel beispielsweise aus EP-A-0 604 922 bekannt ist.

Die erfindungsgemäßen Überzugsmittel können auf konventioneller Basis, d.h. mit organischen handelsüblichen Lösemitteln oder auf wäßriger Basis formuliert werden. Lösemittel für die Formulierung auf konventioneller Basis sind beispielsweise die Lösemittel, die vorstehend für die Herstellung der (Meth)acrylcopolymerisate der Komponenten A) und B) durch Lösungspolymerisation angegeben wurden.

Die Überzugsmittel, welche die erfindungsgemäß einzusetzenden Bindemittel enthalten, können neben den bereits genannten Lösemitteln und/oder Wasser zusätzlich lackübliche Hilfsstoffe enthalten, beispielsweise Verlaufsmittel z.B. auf der Basis von (Meth)acryl-Homopolymerisaten, Silikonöle, Weichmacher wie Phosphorsäure-, Phthalsäure- oder Zitronensäureester, Rheologiebeeinflusser, wie pyrogenes Siliziumdioxid, Mikrogele, hanstoffgruppenhaltige Umsetzungsprodukte aus primären Aminen und Polyisocyanaten ("sagging control agents"), hydriertes Ricinusöl, Härtungsbeschleuniger wie z.B. Phosphorsäure, Phosphorsäureester, Dicarbonsäure-Halbester, Zitronensäure; organische Metallsalze, wie Dibutylzinndilaurat, Zink-Naphthenat, Wismuttricarboxylat, ferner tertiäre Aminogruppen enthaltende Verbindungen wie Triethylamin und Lichtschutzmittel.

Wie erwähnt, können die erfindungsgemäßen Überzugsmittel auch in einer wasserverdünnbaren Form vorliegen. Sofern eine wäßrige Emulsion erstellt werden soll, wird das bei der Herstellung des die Komponenten A) und B) enthaltenden Bindemittels verwendete Lösemittel weitgehend entfernt. Dies kann beispielsweise destillativ, gegebenenfalls unter Vakuum erfolgen. Das so erhaltene die Komponenten A) und B) enthaltende Bindemittelkonzentrat, das einen hohen Festkörpergehalt von beispielsweise 90 Gew.-% hat, kann dann, sofern saure Gruppierungen in ausreichendem Maße enthalten sind, mit einer üblichen Base, z.B. Ammoniak oder einem organischem Amin, z.B. Triethylamin, neutralisiert werden. Das neutralisierte A) und B) enthaltende Bindemittel kann, gegebenenfalls nach Zumischung der Vernetzer D) und gegebenenfalls E) in Wasser emulgiert werden. Dies kann beispielsweise unter starkem Rühren und erforderlichenfalls unter Erwärmen, beispielsweise auf Temperaturen von 30 bis 80°C, z.B. 50°C, erfolgen.

Alternativ kann das A) und B) enthaltende Bindemittel mit Hilfe eines üblichen, nicht-ionischen Emulgators emulgiert werden. Dies geschieht z.B. durch Homogenisieren des Bindemittelkonzentrats gegebenenfalls zusammen mit den Vernetzern D) und gegebenenfalls E) und eines oder mehrerer nicht-ionischer Emulgatoren, gegebenenfalls unter Erwärmen, beispielsweise auf Temperaturen von 30 bis 80°C, z.B. 60°C. Ein derartiges Gemisch kann in einer üblichen Homogenisierungseinrichtung emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf das Bindemittelkonzentrat, eingesetzt. Wasserunlösliche Komponenten des Überzugsmittels wie z.B. Lackadditive wie Lichtschutzmittel oder Verlaufshilfsmittel, beispielsweise auf der Basis von Silikonölen können vor der Überführung in die wäßrige Phase dem Bindemittelkonzentrat zugemischt und zusammen emulgiert werden.

Die erfindungsgemäßen Überzugsmittel sind besonders geeignet zur Erzeugung einer transparenten Deckschicht (Klarlackschicht) bei der Herstellung ofentrocknender Mehrschichtüberzüge. Die Deckschicht kann beispielsweise nach dem Naß-in-Naß-Verfahren auf eine vorher aufgetragene Basislackschicht aufgetragen werden, worauf beide Schichten gemeinsam gehärtet werden. Die Erfindung betrifft daher auch das Verfahren zur Herstellung von Mehrschichtüberzügen bzw. die Verwendung der Überzugsmittel zu deren Herstellung. Die erfindungsgemäßen bevorzugt nicht-wäßrigen Überzugsmittel können dabei als transparente Decklacke auf Schichten aus wäßrigen oder lösemittelhaltigen Basislacken für härtbare Mehrschichtüberzüge aufgetragen werden.

Es können auch pigmentierte Überzugsmittel bereitgestellt werden. Hierzu können übliche organische und/oder anorganische Farbpigmente und/oder Füllstoffe, wie Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente eingesetzt werden.

Die erfindungsgemäßen Überzugsmittel werden nach bekannten Verfahren, wie z.B. Spritzen, Tauchen, Rollen oder Rakeln, appliziert. Dabei wird im Falle der Verwendung als Decklack dieser auf das gegebenenfalls schon mit weiteren Lackschichten versehene Substrat aufgetragen. Die erfindungsgemäßen Überzugsmittel können auch unter Verwendung von überkritischem Kohlendioxid als Lösemittel im Spritzverfahren appliziert werden. Dabei kann der Gehalt an organischen Lösemitteln stark verringert werden. Nach einer Abdunstphase wird das applizierte Überzugsmittel bevorzugt durch Erwärmen vernetzt. Die Einbrenntemperaturen liegen bevorzugt zwischen 80 und 160°C, besonders bevorzugt zwischen 120 und 150°C. Die Härtungszeiten liegen beispielsweise in der Größenordnung von 20 bis 40 Minuten. Die Schichtdicke des eingebrannten Films beträgt beispielsweise ca. 15 bis 50 µm. Dabei entsteht ein vernetzter, harter, glänzender Lacküberzug. Eine bevorzugte Ausführungsform ist die Applikation des erfindungsgemäßen Überzugsmittels als Klarlacküberzug auf einen Basislack. Dabei kann bevorzugt naß-in-naß gearbeitet werden, oder der Basislack wird vorher durch Erwärmen getrocknet. Es entsteht eine besonders gute Haftung der beiden Schichten.

Mit erfindungsgemäß als Klarlacke formulierten Überzugsmitteln können beispielsweise Basislacke überlackiert werden, die übliche Decklackpigmente enthalten können, bevorzugt enthalten die Basislacke Effektpigmente, wie z.B. Metallic-Pigmente. Als Bindemittelbasis das Basislacks werden bevorzugt Polyester-, Polyurethan- oder Acrylatharze eingesetzt. Diese Bindemittel können gegebenenfalls über Vernetzer, z.B. Melamin- oder Isocyanatderivate, vernetzt werden.

Die erfindungsgemäßen Überzugsmittel eignen sich besonders für Decklacke oder Klarlacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserienlackierung geeignet.

Die erfindunsgemäßen Überzugsmittel sind besonders geeignet zur Herstellung einer transparenten Deckschicht eines ofentrocknenden Mehrschichtüberzugs. Sie eignen sich insbesondere für die Serienlackierung von Kraftfahrzeugkarosserien und deren Teilen.

### Beispiel 1

In einem 2-Liter-Dreihals-Schliffkolben, der mit einem Rührwerk, Kontaktthermometer, Kugelkühler und Tropftrichter ausgerüstet ist, werden 308 g eines aromatischen Kohlenwasserstoffs mit einem Siedebereich von 153°C bis 180°C und 22 g n-Butanol vorgelegt und unter Rühren bei eingeschalteter RückfluBkühlung auf 146°C geheizt. Innerhalb von 5 Stunden wird eine Mischung aus 14 g Acrylsäure, 177 g 2-Ethylhexylmethacrylat, 128 g 2-Hydroxyethylmethacrylat, 220 g Styrol und 11 g Di-tert.-Butylperoxid zudosiert. Anschließend wird der Ansatz 5 Stunden bei 146°C nachpolymerisiert, auf 100°C abgekühlt und mit 97 g eines aromatischen Kohlenwasserstoffs mit einem Siedebereich von 153°C bis 180°C und 23 g n-Butanol verdünnt. Die Polymerisat-Lösung hatte einen Festkörper von 55,3 %, eine Säurezahl von 20,4 mg KOH/g, eine OH-Zahl von 102 mg KOH/g und eine Viskosität von 1950 mPa.s/25°C.

### Beispiel 2

In einem 2-Liter-Dreihals-Schliffkolben, der mit einem Rührwerk, Kontaktthermometer, Kugelkühler und Tropftrichter ausgerüstet ist, werden 200 g eines aromatischen Kohlenwasserstoffs mit einem Siedebereich von 153°C bis 180°C und 20 g n-Butylacetat vorgelegt und unter Rühren bei eingeschalteter Rückflußkühlung auf 148°C geheizt. Innerhalb von 6 Stunden wird eine Mischung aus 5 g Acrylsäure, 148 g Isobutylacrylat, 190 g 2-Ethylhexylmethacrylat, 267 g 2-Hydroxypropylmethacrylat, 10 g Di-tert.-Butylperoxid und 30 g Tert.-Butylperoctanoat kontinuierlich zudosiert. Anschließend wird der Ansatz 6 Stunden bei 145°C nachpolymerisiert, auf 100°C abgekühlt und mit 50 g eines aromatischen Kohlenwasserstoffs mit einem Siedebereich von 153°C bis 180°C und 80 g n-Butylacetat verdünnt. Die Polymerisat-Lösung hatte einen Festkörper von 65,1 %, eine Säurezahl von 10,9 mg KOH/g, eine OH-Zahl von 160 mg KOH/g und eine Viskosität von 546 mPa.s/25°C.

### Beispiel 3

Ein einkomponentiger Klarlack wurde hergestellt durch homogenes Vermischen von 29,0 Teilen der Harzlösung aus Beispiel 1 mit 24,4 Teilen der Harzlösung aus Beispiel 2, 15,5 Teilen einer 65 %igen Lösung eines Malonsäurediethylester-verkappten Isocyanurats von Isophorondiisocyanat, 15,5 Teilen einer 58 %igen Lösung eines butanolveretherten Melaminharzes, 0,6 Teilen eines Lichtschutzmittels vom Typ Benzotriazol, 0,7 Teilen eines Lichtschutzmittels vom Typ HALS, 0,7 Teilen einer 10 %igen Silikonöl-Lösung, 4 Teilen n-Butanol und 9,6 Teilen eines aromatischen Kohlenwasserstoffs mit einem Siedebereich von 153°C bis 180°C.

### Beispiel 4

Ein einkomponentiger Klarlack wurde hergestellt durch homogenes Vermischen von 27,5 Teilen der Harzlösung aus Beispiel 1 mit 25,7 Teilen der Harzlösung aus Beispiel 2, 15,5 Teilen einer 65 %igen Lösung eines Malonsäurediethylester-verkappten Isocyanurats von Isophorondiisocyanat, 15,5 Teilen einer 58 %igen Lösung eines butanolveretherten Melaminharzes, 0,6 Teilen eines Lichtschutzmittels vom Typ Benzotriazol, 0,7 Teilen eines Lichtschutzmittels vom Typ HALS, 0,7 Teilen einer 10 %igen Silikonöl-Lösung, 4 Teilen n-Butanol und 9,8 Teilen eines aromatischen Kohlenwasserstoffs mit einem Siedebereich von 153°C bis 180°C.

Mit in der Automobilserienlackierung verwendetem handelsüblichem kathodisch abscheidbarem Elektrotauchlack (KTL) (18 µm) und handelsüblichem Füller (35 µm) vorbeschichtete Karosseriebleche werden mit handelsüblichem wasserverdünnbarem Metallicbasislack in einer Trockenschichtdicke von 15 µm lackiert und 6 min. bei 80°C vorgetrocknet. Direkt anschließend wird der Klarlack aus Beispiel 3, 4 bzw. einem Vergleichsbeispiel (Beispiel 2 aus EP-A-0 653 468) in einer Trockenschichtdicke von 35 µm durch Spritzauftrag naß-in-naß appliziert und nach 5 min. Ablüften bei Raumtemperatur 20 min. bei 140°C (Objekttemperatur) eingebrannt.

Die erhaltenen Ergebnisse sind in Tabelle 1 aufgeführt. Die Tests wurden nach allgemeinen Industrienormen durchgeführt. Zur Prüfung der Klarlacke auf Schwefelsäurebeständigkeit wurde der Tropfentest mit 10 %iger Schwefelsäure gewählt. Die Prüfbleche werden auf eine beheizbare Platte gelegt und auf 60°C geheizt. Dabei muß gewährleistet sein, daß die Bleche zur optimalen Temperaturübertragung plan aufliegen. Am Ende der Aufheizphase, d.h. bei 60°C wird pro Minute ein Tropfen auf die Klarlackoberfläche appliziert. Die Gesamtzeit beträgt 30 Minuten. Nach Ablauf der Prüfzeit wird die Lackierung mit Wasser abgewaschen. Wenn notwendig, kann zum Reinigen zusätzlich eine Bürste verwendet werden.

Zur Beurteilung der Schwefelsäurebeständigkeit wird die Einwirkzeit in Minuten angegeben, bei der die erste sichtbare Filmveränderung (Quellung), Beschädigung (Vermattung) und der Basislack-Angriff auftrat.

**TABELLE 1**

| | Erfindungsgemäße Beispiele | | Vergleich |
|---|---|---|---|
| Beispiel: | 3 | 4 | 2 aus EP-A-0 653 468 |
| Glanz 20°: (DIN 67530) | 93 | 92 | 88 |
| Pendelhärte: (Schwingungen) | 124 | 129 | 77 |
| Schwefelsäure-Test, 10 %ige H₂SO₄,30'60°C Quellung | 18 | 19 | 17 |
| Vermattung | >30 | >30 | 22 |
| Basecoat-Angriff | >30 | >30 | 30 |
| Schwitzkasten (DIN 50017) n. 240 h: | i.0. | i.0. | Vermattung |

## Patentansprüche

1. Überzugsmittel, enthaltend als Bindemittel:
| | |
|---|---|
| A) 20 bis 40 Gew.-% | eines oder mehrerer hydroxyfunktioneller (Meth)acryl-Copolymerisate, erhältlich aus |
| a1)30 bis 50 Gew.-% | Styrol und/oder einem oder mehreren Styrolderivaten |
| a2)15 bis 30 Gew.-% | Hydroxyethyl-, Hydroxypropyl- und/oder Hydroxybutyl(meth)acrylat |
| a3)15 bis 40 Gew.-% | einer oder mehrerer nicht-funktionalisierter (Cyclo)alkyl(meth)acrylate mit 8 bis unter 18 C-Atomen im (Cyclo)alkylrest |
| a4)2 bis 4 Gew.-% | (Meth)acrylsäure |
| a5)0 bis 30 Gew.-% | eines oder mehrerer nicht-funktioneller (Cyclo)alkyl(meth)acrylate mit bis zu 7 C-Atomen im (Cyclo)alkylrest |
| B) 20 bis 40 Gew.-% | eines oder mehrerer hydroxyfunktioneller (Meth)acryl-Copolymerisate, erhältlich aus |
| b1)25 bis 50 Gew.-% | Hydroxyethyl-, Hydroxypropyl- und/oder Hydroxybutyl(meth)acrylat |
| b2)20 bis 40 Gew.-% | eines oder mehrerer nicht-funktionalisierter (Cyclo)alkyl(meth)acrylate mit 8 bis unter 18 C-Atomen im (Cyclo)alkylrest |
| b3)20 bis 40 Gew.-% | eines oder mehrerer nicht-funktionalisierter (Cyclo)alkyl(meth)acrylate mit bis zu 7 C-Atomen im (Cyclo)alkylrest |
| b4)0,3 bis 2 Gew.-% | (Meth)acrylsäure |
| C)0 bis 40 Gew.% | eines oder mehrerer von A) und B) unterschiedlicher hydroxyfunktioneller Bindemittel, |
| D)10 bis 50 Gew.-% | eines oder mehrerer freier oder blockierter Polyisocyanate, |
| E)0 bis 40 Gew.-% | einer oder mehrerer mit den Hydroxylgruppen der Komponenten A), B) und gegebenenfalls C) unter Ether- und/oder Estergruppenbildung vernetzenden Komponenten auf Triazinbasis, |
wobei die Summen der Komponenten A) bis E), a1) bis a5) und b1) bis b4) sich jeweils zu 100 Gew.-% ergänzen,
sowie gegebenenfalls ein oder mehrere Lösemittel und/oder Wasser,
sowie gegebenenfalls ein oder mehrere Pigmente und/oder lackübliche Hilfsstoffe.

2. Überzugsmittel nach Anspruch 1, worin die Komponente A) ein Gewichtsmittel der Molmasse (Mw) von 5000 bis 20000 und die Komponente B) ein Gewichtsmittel der Molmasse (Mw) von 2000 bis 5000 aufweist.

3. Überzugsmittel nach Anspruch 1 oder 2, worin die Komponente A) eine Glasübergangstemperatur im Bereich von +30°C bis +60°C und die Komponente B) eine Glasübergangstemperatur im Bereich von -20°C bis +40°C aufweist.

4. Überzugsmittel nach einem der Ansprüche 1 bis 3, worin die Komponente A) eine OH-Zahl von 80 bis 120 mg KOH/g und die Komponente B) eine OH-Zahl von 120 bis 180 mg KOH/g aufweist.

5. Überzugsmittel nach einem der vorhergehenden Ansprüche, worin die Komponente A) eine Säurezahl von 15 bis 30 mg KOH/g und die Komponente B) eine Säurezahl von 3 bis 15 mg KOH/g aufweist.

6. Überzugsmittel nach Anspruch 5, worin die Säurezahl bedingende Carboxylgruppen der Komponenten A) und/oder B) zumindest teilweise neutralisiert sind und das Überzugsmittel in wäßriger Form vorliegt.

7. Überzugsmittel nach einem der vorhergehenden Ansprüche, dadurch gekennzeichnet, daß es pigmentfrei als Klarlack formuliert ist.

8. Verfahren zur Mehrschichtlackierung von Substraten durch Auftrag einer pigmentierten Basislackschicht auf ein gegebenenfalls vorbeschichtetes Substrat und Überlackieren der Basislackschicht mit einer Klarlackschicht, dadurch gekennzeichnet, daß man zur Herstellung der Basislackschicht und/oder insbesondere der Klarlackschicht ein Überzugsmittel gemäß einem der Ansprüche 1 bis 7 verwendet.

9. Verfahren nach Anspruch 8, dadurch gekennzeichnet, daß man die Klarlackschicht aus einem Überzugsmittel gemäß Anspruch 7 bildet, diese naß-in-naß auf eine wäßrige oder lösemittelhaltige Basislackschicht aufbringt und die beiden Schichten gemeinsam einbrennt.

10. Verwendung der Überzugsmittel nach Anspruch 7 als Klarlacke oder Decklacke, insbesondere bei der Mehrschichtlackierung von Kraftfahrzeugkarosserien oder deren Teilen.

## Claims

1. A coating medium containing, as a binder vehicle:
| | |
|---|---|
| A) 20 to 40 % by weight | of one or more hydroxyfunctional (meth)acrylic copolymers, obtainable from |
| a1) 30 to 50 % by weight | styrene and/or one or more styrene derivatives |
| a2) 15 to 30 % by weight | hydroxyethyl, hydroxypropyl and/or hydroxybutyl (meth)acrylate |
| a3) 15 to 40 % by weight | of one or more non-functionalised (cyclo)alkyl (meth)acrylates comprising 8 to less than 18 C atoms in their (cyclo)alkyl radical |
| a4) 2 to 4 % by weight | (meth)acrylic acid |
| a5) 0 to 30 % by weight | of one or more non-functional (cyclo)alkyl (meth)acrylates comprising up to 7 C atoms in their (cyclo)alkyl radical |
| B) 20 to 40% by weight | of one or more hydroxy-functional (meth)acrylic copolymers, obtainable from |
| b1) 25 to 50% by weight | hydroxyethyl, hydroxypropyl and/or hydroxybutyl (meth)acrylate |
| b2) 20 to 40% by weight | of one or more non-functionalised (cyclo)alkyl (meth)acrylates comprising 8 to less than 18 C atoms in their (cyclo)alkyl radical |
| b3) 20 to 40% by weight | of one or more non-functionalised (cyclo)alkyl (meth)acrylates comprising up to 7 C atoms in their (cyclo)alkyl radical |
| b4) 0.3 to 2% by weight | (meth)acrylic acid |
| C) 0 to 40 % by weight | of one or more hydroxy-functional binder vehicles which are different from A) and B), |
| D) 10 to 50 % by weight | of one or more free or blocked polyisocyanates, |
| E) 0 to 40 % by weight | of one or more triazine-based components which crosslink with the hydroxyl groups of components A), B) and optionally C) with the formation of ether and/or ester groups, |
wherein the sums of components A) to E), a1) to a5) and b1) to b4) add up to 100 % by weight in each case,
and optionally also containing one or more solvents and/or water, as well as optionally one or more pigments and/or customary lacquer adjuvant substances.

2. A coating medium according to claim 1, wherein component A) has a weight average molecular weight (Mw) from 5000 to 20,000 and component B) has a weight average molecular weight (Mw) from 2000 to 5000.

3. A coating medium according to claims 1 or 2, wherein component A) has a glass transition temperature within the range from +30°C to +60°C and component B) has a glass transition temperature within the range from -20°C to +40°C

4. A coating medium according to any one of claims 1 to 3, wherein component A) has an OH number from 80 to 120 mg KOH/g and component B) has an OH number from 120 to 180 mg KOH/g.

5. A coating medium according to any one of the preceding claims, wherein component A) has an acid number from 15 to 30 mg KOH/g and component B) has an acid number from 3 to 15 mg KOH/g .

6. A coating medium according to claim 5, wherein the carboxyl groups which determine the acid numbers of components A) and/or B) are at least partially neutralised and the coating medium in exists in an aqueous form.

7. A coating medium according to any one of the preceding claims, characterised in that it is formulated as a clear lacquer free from pigment.

8. A process for the multi-layer coating of substrates by the application of a pigmented base lacquer coat to a substrate, which is optionally pre-coated, and overcoating the base lacquer coat with a clear lacquer coat, characterised in that a coating medium according to any one of claims 1 to 7 is used for the production of the base lacquer coat and/or of the clear lacquer coat in particular.

9. A process according to claim 8, characterised in that the clear lacquer coat is formed from a coating medium according to claim 7, the latter is applied wet-into-wet to an aqueous or solvent-containing base lacquer coat, and the two coats are stoved jointly.

10. Use of coating media according to claim 7 as clear lacquers or covering lacquers, particularly for the multi-layer coating of motor vehicle bodies or parts thereof.

## Revendications

1. Composition de revêtement contenant, en tant que liant :
A) de 20 à 40 % en poids d'un ou plusieurs copolymères (méth)acryliques à fonctionnalité hydroxy, pouvant être obtenus à partir de
a1) 30 à 50 % en poids de styrène et/ou d'un ou plusieurs dérivés du styrène,
a2) 15 à 30 % en poids de (méth)acrylate d'hydroxyéthyle, d'hydroxypropyle et/ou d'hydroxybutyle,
a3) 15 à 40 % en poids d'un ou plusieurs (méth)acrylates de (cyclo)alkyle non-fonctionnalisés ayant de 8 à moins de 18 atomes de carbone dans le fragment (cyclo)alkyle,
a4) 2 à 4 % en poids d'acide (méth)acrylique,
a5) 0 à 30 % en poids d'un ou plusieurs (méth)acrylates de (cyclo)alkyle non-fonctionnel ayant jusqu'à 7 atomes de carbone dans le fragment (cyclo)alkyle,
B) de 20 à 40 % en poids d'un ou plusieurs copolymères (méth)acryliques à fonctionnalité hydroxy, pouvant être obtenus à partir de
b1) 25 à 50 % en poids de (méth)acrylate d'hydroxyéthyle, d'hydroxypropyle et/ou d'hydroxybutyle,
b2) 20 à 40 % en poids d'un ou plusieurs (méth)acrylates de (cyclo)alkyle non-fonctionnalisé ayant de 8 à moins de 18 atomes de carbone dans le fragment (cyclo)alkyle,
b3) 20 à 40 % en poids d'un ou plusieurs (méth)acrylates de (cyclo)alkyle non-fonctionnalisé ayant jusqu'à 7 atomes de carbone dans le fragment (cyclo)alkyle,
b4) 0,3 à 2 % en poids d'acide (méth)acrylique,
C) de 0 à 40 % en poids d'un ou plusieurs liants à fonctionnalité hydroxy, différents de A) et B),
D) de 10 à 50 % en poids d'un ou plusieurs polyisocyanates libres ou bloqués,
E) de 0 à 40 % en poids d'un ou plusieurs composants à base de triazine, qui se réticulent avec les groupes hydroxyle des composants A), B) et éventuellement C), avec formation de groupes éther et/ou ester,
la somme des quantités des composants A) à E), a1) à a5) et b1) à b4) étant dans tous les cas de 100 % en poids,
et éventuellement un ou plusieurs liants et/ou de l'eau, et éventuellement un ou plusieurs pigments et/ou adjuvants usuels dans les peintures.

2. Composition de revêtement selon la revendication 1, dans laquelle le composant A) présente une masse moléculaire moyenne en masse (Mw) de 5000 à 20 000, et le composant B) a une masse moléculaire moyenne en masse (Mw) de 2000 à 5000.

3. Composition de revêtement selon la revendication 1 ou 2, dans laquelle le composant A) a une température de transition vitreuse comprise entre +30 et +60°C et le composant B) a une température de transition vitreuse comprise entre -20 et +40°C.

4. Composition de revêtement selon l'une des revendications 1 à 3, dans laquelle le composant A) a un indice d'hydroxyle de 80 à 120 mg KOH/g et le composant B) a un indice d'hydroxyle de 120 à 180 mg KOH/g.

5. Composition de revêtement selon l'une des revendications précédentes, dans laquelle le composant A) a un indice d'acide de 15 à 30 mg KOH/g et le composant B) a un indice d'acide de 3 à 15 mg KOH/g.

6. Composition de revêtement selon la revendication 5, dans laquelle les groupes carboxyle du composant A) et/ou du composant B) qui définissent l'indice d'acide sont au moins partiellement neutralisés, et la composition de revêtement se présente sous forme aqueuse.

7. Composition de revêtement selon l'une des revendications précédentes, caractérisée en ce qu'elle est formulée sans pigment sous forme d'un vernis transparent.

8. Procédé de revêtement multicouche de substrats par application d'une couche d'un vernis de base pigmenté sur un subjectile éventuellement revêtu au préalable, et application d'une couche d'un vernis transparent sur la couche du vernis de base, caractérisé en ce que, pour fabriquer la couche du vernis de base et/ou en particulier la couche du vernis transparent, on utilise une composition de revêtement selon l'une des revendications 1 à 7.

9. Procédé selon la revendication 8, caractérisé en ce qu'on forme la couche du vernis transparent à partir d'une composition de revêtement selon la revendication 7, on applique cette dernière mouillé sur mouillé sur une couche d'un vernis de base à l'eau ou contenant un solvant, et on soumet les deux couches à une cuisson commune.

10. Utilisation des compositions de revêtement selon la revendication 7 en tant que vernis transparents ou vernis de finition, en particulier pour le revêtement multicouche de carrosseries de véhicules à moteur, ou de parties de ces dernières.
